# FASCICULE DE BREVET EUROPEEN

(11) **EP 1 223 511 B1**
(45) Date de publication et mention de la délivrance du brevet: **07.07.2004**
(21) Numéro de dépôt: 02290022.9
(22) Date de dépôt: 07.01.2002
(51) Int. Cl.: G06F 11/16, G06F 11/14, H04L 12/56, H04L 29/14

(54) **Système de routage assurant la continuité de service des interfaces associées aux réseaux voisins**
Wegeleitsystem zur Sicherstellung der Kontinuität der Interfacedienste zu den assoziierten Nachbarnetzen
Routing system guaranteeing the service continuity of interfaces associated with neighbouring networks

(30) Priorité: 11.01.2001 FR 0100308
(43) Date de publication de la demande: 17.07.2002
(73) Titulaire: ALCATEL, 75008 Paris (FR)
(72) Inventeur: Rombeaut, Jean-Pierre, 59600 Maubeuge (FR); Saintillan, Yves, 91300 Massy (FR)
(74) Mandataire: Sciaux, Edmond

(56) Documents cités:
- US-A- 5 473 599
- J.MOY: "IETF STD. 54 (RFC 2328): OSPF Version 2" [en ligne] , IETF XP002176650 Extrait de l'Internet: <URL: ftp://ftp.isi.edu/in-notes/rfc2328.txt> [extrait le 2001-09-04] * figure 11 *

## Description

La présente invention concerne la continuité du service de routage dans un réseau de type IP (*Internet Protocol*). L'invention s'applique particulièrement bien au protocole de routage OSPF (*Open Shortest Path First*) tel que défini dans le RFC 2328 de l'IETF (*Internet Engineering Task Force*).
Le protocole OSPF est un protocole de la famille TCP/IP permettant aux systèmes de routage (ou router selon la terminologie en langue anglaise) d'un réseau Internet d'avoir une connaissance suffisante du réseau pour pouvoir acheminer correctement les paquets reçus vers leur destination.
La particularité du protocole OSPF est d'être un protocole de routage dynamique, c'est-à-dire capable de prendre en compte les changements dans la topologie du réseau de façon dynamique. Pour ce faire, le protocole comporte des étapes d'échange de messages de façon périodique, afin de mettre constamment à jour la connaissance que possède chaque système de routage du réseau ou d'une partie du réseau.

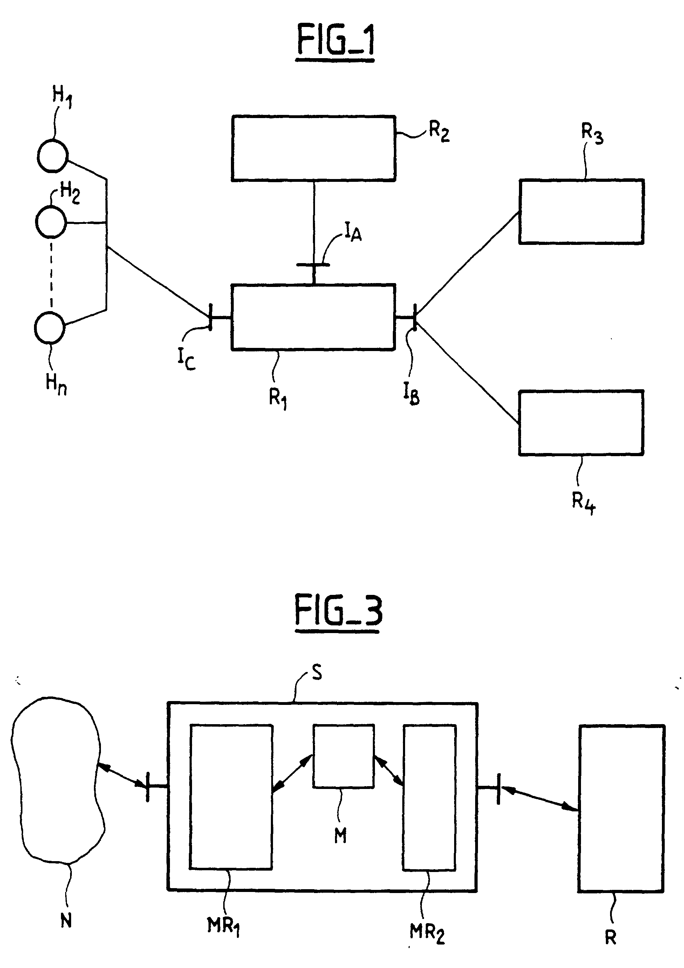

La figure 1 illustre un environnement possible pour un système de routage R₁. Dans cet exemple, il est connecté à trois réseaux.
Il est connecté à un réseau formé d'un unique système de routage R₂ par une connexion point-à-point (par exemple, une liaison série).
Il comporte aussi une deuxième connexion avec un réseau composé de deux systèmes de routage R₃ et R₄. Ce réseau peut par exemple être de type point à multipoint (*Point to Multipoint Network*), diffusion (*broadcast network*), ou réseau à accès multiple (non broadcast *Multiaccess Network*)...
Enfin, il comporte une troisième connexion avec un réseau formé d'un ensemble de stations hôtes H₁, H₂... Hₙ. Ce type de réseau est connu sous le terme anglais « *Stub network* ».

À intervalle régulier, le système de routage R₁ émet sur chacune de ces connexions, un message dit « hello » afin de signifier à ses voisins qu'il est toujours actif. Réciproquement, il reçoit de la part de ses voisins, des messages « hello » indiquant que, eux aussi, sont toujours actifs.
La transmission (c'est-à-dire l'émission et la réception) de messages « hello » est effectuée par l'intermédiaire d'interfaces physiques. Selon ce protocole OSPF, il existe au sein de chaque système de routage, une interface physique pour chaque connexion. Sur l'exemple de la figure 1, le système de routage R₁ possède donc trois interfaces I_{A} avec le système de routage R₂, I_{B} avec les systèmes de routage R₃ et R₄ et I_{C} avec l'ensemble de stations hôtes.

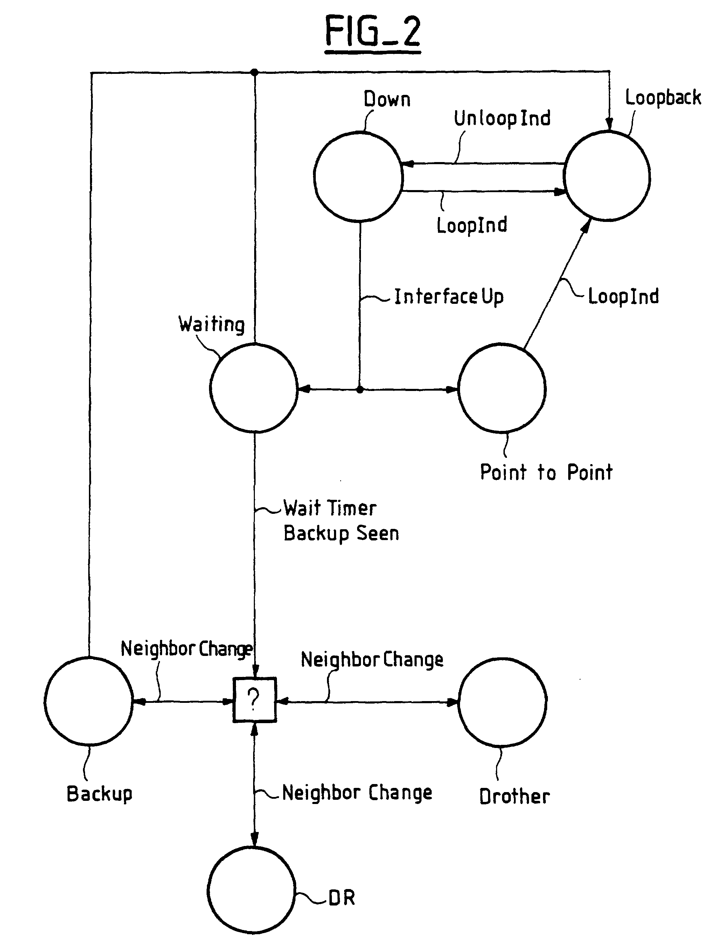

La gestion de chacune de ces interfaces est effectuée par une machine à états qui lui est dédiée. De telles machines à états sont représentées par la figure 2.
Selon l'usage, les cercles représentent les états dans lesquels l'interface peut être. À tout moment, l'interface est obligatoirement dans un de ces états. Chaque flèche dans ce diagramme représente une transition, c'est-à-dire le passage d'un état à un autre.
Le nom des états est indiqué en langue anglaise ainsi qu'il peut être trouvé dans le RFC 2328.
L'état initial de la machine à état est représenté par le cercle référencé « Down ». Dans cet état, l'interface ne laisse passer aucun trafic.
L'événement « InterfaceUp » signale que l'interface devient opérationnelle, et que la machine à états doit sortir de l'état « Down ». Deux possibilités s'offrent alors, en fonction du type de connexion géré par l'interface. Dans le cas où il s'agit d'une connexion de type « point-à-point » avec un autre système de routage (comme c'est le cas entre les systèmes de routage R₁ et R₂ sur l'exemple de la figure 1), la machine à états passe dans un état référencé « Point to Point ». Dans les autres cas, la machine à états passe dans l'état « Waiting ».

En reprenant l'exemple de la figure 1, et en supposant que les machines à états étaient précédemment à l'état « Down », l'arrivée d'un événement « InterfaceUP » ferait passer les machines à états des interfaces I_{C} et I_{B} à l'état « Waiting » et la machine à états associée à l'interface I_{A} à l'état « Point to Point ».
Dans cet état « Waiting », la machine à état déclenche la transmission de messages « hello » pour sonder l'état de la connexion. Cette transmission a aussi pour but de déterminer un système de routage désigné (ou « designated *router »* en anglais) et un système de routage désigné de secours (ou « *backup designated router* »).
Cette notion de système de routage désigné correspond à une élection d'un système de routage de référence parmi un ensemble, sur lequel les autres systèmes de routage de cet ensemble vont venir synchroniser les informations qu'ils possèdent sur le réseau. Ces données sont stockées dans chaque système de routage dans une base d'informations.
En effet, selon le protocole OSPF, chaque système de routage possède des tables de routage permettant de router les paquets reçus dans l'ensemble d'une région du réseau. Ces tables de routage sont calculées par les systèmes de routage à partir de ces bases d'informations. Afin que ces tables de routage soient constamment à jour, les systèmes de routage procèdent à des échanges de messages de mise à jour de leur base d'informations.
Afin de diminuer le trafic sur le réseau, on établit donc un système de routage désigné auprès desquels les autres systèmes de routage vont mettre à jour leurs propres bases d'informations.
Ce mécanisme appelé élection est plus précisément décrit dans le RFC 2328 de l'IETF.
Il est juste important de noter ici que l'état « Waiting » correspond à une phase d'écoute du réseau afin de déterminer s'il existe déjà un système de routage désigné ou un système de routage désigné de secours.
Cet état se termine par l'apparition d'un événement « WaitTimer » signifiant qu'un délai prédéterminé (typiquement 40 secondes) est écoulé, ou d'un événement « BackupSeen » signifiant qu'un système de routage désigné de secours à été détecté.
Suivant le résultat de cette phase d'élection, la machine à états passe respectivement dans l'état « DR », « Backup » ou « DROther ».
L'événement « NeighborChange » intervient lorsqu'il y a un changement dans le réseau connecté à l'interface physique en question impactant le système de routage désigné et/ou le système de routage désigné de secours. Cet événement peut déclencher le changement d'état de la machine à états.
Enfin, l'état « Loopback » signifie que l'interface boucle sur elle-même, c'est-à-dire qu'elle ne peut pas recevoir de messages provenant de l'extérieur du système de routage. La machine à états passe dans cet état à la suite d'un événement « *Looplnd* ». Elle en sort par l'événement « *UnLooplnd* » pour passer dans l'état « Down ».

Lorsqu'un système de routage est redémarré, après une défaillance par exemple, la machine à états doit donc redémarrer depuis l'état « Down ». Les autres systèmes de routage en communication avec lui, sont alors alertés de ce changement, et peuvent aussi subir un changement d'état de leur machine à états en déclenchant un événement « NeighborChange ».
Afin de minimiser les conséquences d'une défaillance d'un système de routage, ou de son arrêt temporaire pour maintenance, on peut mettre en oeuvre une redondance de la fonction de routage mise en oeuvre par les systèmes de routage.
Cette redondance peut être atteinte en ayant un système de routage actif et un système de routage en veille. Celui en veille devient actif lorsque le module de routage actif s'arrête, par exemple à la suite d'une défaillance.

Une telle solution est notamment mise en oeuvre par la société Cisco, dans le protocole HSRP (*Hot Standby Router Protocol*), qui est par exemple décrit, à la date du dépôt, à l'adresse Internet :
http://www.cisco.com/warp/public/619/hsrpguidetoc.html
Une autre solution de redondance est décrite dans le RFC 2338 de l'IETF intitulé « *Virtual Router Redundancy Protocol*).

Toutefois, là encore, lorsque à la suite de la défaillance d'un premier système, à l'état actif, le deuxième système de routage (jusqu'alors en veille) reprend la main, les machines à états gérant les interfaces avec les différentes connexions du système de routage en question doivent redémarrer à l'état « Down ».

Ceci a pour conséquence un laps de temps d'indisponibilité du second module de routage avant qu'il ne puisse retrouver l'état qui était celui du premier avant sa défaillance ou son arrêt. Ce délai est au moins égal au temps d'attente avant élection, soit typiquement 40 secondes.

Ce redémarrage des machines à états a aussi pour inconvénient de provoquer des changements dans les états des systèmes de routage voisins.
L'invention a pour but de palier ces inconvénients. Pour ce faire, elle a pour objet un système de routage composé d'au moins deux modules de routage, un seul étant dans un état actif à un instant donné, les autres étant dans un état de veille, et d'un moyen permettant de basculer un de ces autres modules de routage d'un état de veille à un état actif lors de l'arrêt du module de routage à l'état actif, chacun des modules de routage comportant des connexions avec un ou plusieurs réseaux, et comportant au moins une machine à états, chaque machine à état gérant l'interface associée à une de ces connexions. L'invention se caractérise en ce que chacun de ces modules de routage possède un moyen pour, à l'état actif, mémoriser des informations relatives à l'état de ces ou cette machine à état, lorsque celle-ci est dans un état stable, et un moyen pour récupérer ces informations lors d'un basculement.

Ainsi, par le biais de la mémorisation, le module de routage dans l'état de veille est à même de prendre la main dans le même état que celui dans lequel était le module de routage à l'état actif avant son arrêt ou sa défaillance.
Ainsi, le basculement du module de routage à l'état actif vers le module de routage en état de veille se passe de façon transparente pour les autres systèmes de routage du réseau, et sans engendrer de délai de non disponibilité.

L'invention et ses avantages apparaîtront de façon plus claire dans la description d'une mise en oeuvre qui va suivre, en liaison avec les figures annexées.
La figure 1, déjà commentée, représente l'environnement d'un système de routage.
La figure 2, également déjà commentée, représente la machine à états associée à une interface dans un système de routage.
La figure 3 illustre de façon très schématique, un système de routage conforme à l'invention.

Sur cette figure 3, on voit que le système de routage S comprend deux modules de routage MR₁ et MR₂. Ces deux modules de routage réalisent les mêmes fonctions que ceux de l'état de la technique.
Toutefois, ces deux modules de routage disposent de surcroît de moyens pour communiquer entre eux, par exemple par l'intermédiaire d'une mémoire partagée M.
Plus précisément, chacun des modules de routage MR₁ et MR₂ possède un moyen pour mémoriser des informations relatives à l'état de ses machines à états, lorsque celle-ci est dans un état stable, et un moyen pour récupérer ces informations. Ce moyen pour mémoriser peut donc être un moyen d'écriture dans la mémoire partagée M, et le moyen pour récupérer peut être un moyen de lecture dans cette même mémoire partagée M.

Toutefois, d'autres mises en oeuvre de l'invention sont possibles, notamment en utilisant un bus logiciel tel CORBA (*Common Object Request Broker Architecture*)

À un instant donné, seul un des deux modules de routage est à l'état actif, c'est-à-dire remplissant son rôle de système de routage. L'autre module de routage est en état de veille, c'est-à-dire qu'il est invisible par le réseau mais prêt pour prendre le rôle du module de routage actif en cas de défaillance ou d'arrêt de celui-ci.

La mémorisation des informations n'est mise en oeuvre que par le module de routage à l'état actif, à chaque fois que la machine à états rentre dans un état stable. Ces états stables sont les états « Down », « Point to Point », « Backup », « DR » et « DROther », c'est-à-dire les états pour lesquels la connexion est déterminée.
Les informations à mémoriser contiennent au moins un identifiant de l'état de la machine à états. Toutefois, il est possible de mémoriser aussi d'autres informations afin de faciliter le démarrage du module de routage en veille, en cas de besoin.
Selon une mise en oeuvre de l'invention, on mémorise des informations relatives à l'interface lors de la création de l'interface et à sa suppression. Ces informations sont celles permettant la création de l'interface conformément à la section 9 du RFC 2328 précédemment évoqué.

La figure 3 illustre un mode de réalisation particulier mettant en oeuvre une mémoire partagée.
Selon ce mode de réalisation, le système de routage S comporte deux interfaces I₁ et I₂, la première avec un réseau N et la seconde avec un réseau formé d'un unique système de routage R. Par conséquent, chacun des modules de routage MR₁ et MR₂ possède deux machines à états, une associée à l'interface I₁ et l'autre associée à l'interface I₂.
Dans un cas typique de fonctionnement, la première machine à états est dans un état « DR » et l'autre machine à états est dans un état « Point to Point ». S'agissant d'états stables, ainsi que définis précédemment, un identifiant de l'état est mémorisé par le module de routage à l'état actif (par exemple MR₁) dans la mémoire partagée M.
Lorsque ce module de routage MR₁ devient non opérationnel, par exemple à la suite d'un arrêt pour maintenance ou d'une défaillance, le module de routage MR₂ passe de l'état de veille à celui d'état actif.
À ce moment, le module de routage MR₂ peut relire d'une part les informations relatives à l'état des deux machines à états, et d'autre part des informations relatives aux interfaces, mémorisées lors de la création des interfaces.
Ainsi, le module de routage MR₂ sait qu'il doit forcer le passage de ces deux machines à états à l'état « Point to Point » pour celle associée à l'interface I₂ et à l'état « DR » pour celle associée à l'interface I₁.
Le module de routage MR₂ peut alors reprendre le rôle du module de routage MR₁ de façon très rapide et transparente pour les autres modules de routage du réseau.

D'autres modes de réalisation sont bien évidemment à la portée de l'homme du métier. Notamment, les deux modules de routage peuvent communiquer via un moyen de communication inter-processus. Ce moyen de communication inter-processus peut par exemple être un bus logiciel, tel le bus logiciel CORBA conforme aux spécifications de l'OMG (*Object Management Group*).
L'étape de mémorisation peut alors être précédée d'une étape d'émission des informations vers le module de routage en veille, à charge pour lui de mémoriser ces informations de sorte qu'ils puissent les récupérer lors d'un basculement d'états.

## Revendications

1. Système de routage (S) composé d'au moins deux modules (MR₁, MR₂) de routage, un seul étant dans un état actif à un instant donné, les autres étant dans un état de veille, et d'un moyen permettant de basculer un desdits autres modules de routage d'un état de veille à un état actif lors de l'arrêt du module de routage à l'état actif, chacun desdits modules de routage comportant des connexions avec un ou plusieurs réseaux (N, R), et comportant au moins une machine à états, chaque machine à état gérant l'interface associée à une desdites connexions, **caractérisé en ce que** chacun desdits modules de routage possède un moyen (M) pour, à l'état actif, mémoriser des informations relatives à l'état de ladite au moins une machine à état, lorsque celle-ci est dans un état stable, et un moyen pour récupérer lesdites informations lors d'un basculement.

2. Système de routage selon la revendication 1, dans lequel la mémorisation desdites informations est réalisée par une mémoire partagée entre lesdits modules de routage.

3. Système de routage selon la revendication 1, dans lequel la mémorisation desdites informations est réalisée au moyen de communication inter-processus permettant auxdits modules de routage de communiquer entre eux.

4. Système de routage selon la revendication 3, dans lequel ledit moyen de communication inter-processus est un bus logiciel de type CORBA.

5. Système de routage selon l'une des revendications 1 à 4, dans lequel chacun desdits modules de routage dispose de surcroît d'un moyen pour mémoriser des informations relatives à l'interface associée, lors de la création de celle-ci, et un moyen pour récupérer ces informations lors d'un basculement à l'état actif.

6. Système de routage selon l'une des revendications précédentes, dans lequel un état stable est un état dans la liste « Down », « Point to Point », « DROther », « Backup », « DR », selon le protocole OSPF.

## Claims

1. A router (S) made up firstly of at least two router modules (MR₁, MR₂), only one of which is in an active state at any given time, the others being in a standby state, and secondly of changeover means making it possible to cause one of said other router modules to go from a standby state to an active state when the router module in the active state stops, each of said router modules having connections with one or more networks (N, R), and having at least one state machine, each state machine managing the interface associated with one of said connections, said router being **characterized in that** each of said router modules has data storage means (M) which, in the active state, enable it to store data relating to the state of said at least one state machine, when said machine is in a stable state, and data retrieval means for retrieving said data when a changeover takes place.

2. A router according to claim 1, in which said data is stored by a shared memory that is shared between said router modules.

3. A router according to claim 1, in which said data is stored by inter-process communications means enabling said router modules to communicate with one another.

4. A router according to claim 3, in which said inter-process communications means are a software bus of the CORBA type.

5. A router according to any one of claims 1 to 4, in which each of said router modules further has means for storing data relating to the associated interface when said interface is created, and means for retrieving said data when a changeover to the active state takes place.

6. A router according to any preceding claim, in which a stable state is a state from the following list: "Down", "Point to Point", "DROther", "Backup", and "DR" in the OSPF protocol.

## Patentansprüche

1. Routing-System (S), bestehend aus mindestens zwei Routing-Modulen (MR₁, MR₂), von denen eines zu einem gegebenen Zeitpunkt in einem aktiven Zustand ist und von denen die anderen in einem Bereitschaftszustand sind, sowie aus einer Vorrichtung, die bei einer Betriebsunterbrechung des im aktiven Zustand befindlichen Routing-Moduls das Umschalten eines der besagten anderen Routing-Module von einem Bereitschaftszustand auf einen aktiven Zustand gestattet, wobei jedes der besagten Routing-Module Verbindungen zu einem oder mehreren Netzwerken (N, R) beinhaltet und mindestens einen Zustandsautomaten beinhaltet, von denen jeder die Schnittstelle verwaltet, die einer der besagten Verbindungen zugeordnet ist, **dadurch gekennzeichnet, daß** jedes der besagten Routing-Module eine Vorrichtung (M) besitzt, um im aktiven Zustand Informationen im Zusammenhang mit dem Zustand des besagten mindestens einen Zustandsautomaten zu speichern, wenn dieser sich in einem stabilen Zustand befindet, sowie eine Vorrichtung zur Wiedergewinnung besagter Informationen bei einem Zustandswechsel.

2. Routing-System gemäß Anspruch 1, bei welchem die Speicherung besagter Informationen mit einem von den besagten Routing-Modulen gemeinsam genutzten Speicher bewerkstelligt wird.

3. Routing-System gemäß Anspruch 1, bei welchem die Speicherung besagter Informationen mit einer Vorrichtung zur prozeßübergreifenden Kommunikation bewerkstelligt wird, welche besagten Routing-Modulen die Kommunikation untereinander ermöglicht.

4. Routing-System gemäß Anspruch 3, bei welchem besagte Vorrichtung zur prozeßübergreifenden Kommunikation ein Software-Bus vom Typ CORBA ist.

5. Routing-System gemäß einem der Ansprüche 1 bis 4, bei welchem jedes der besagten Routing-Module außerdem über eine Vorrichtung zum Speichern von Informationen im Zusammenhang mit der zugeordneten Schnittstelle bei deren Einrichtung sowie über eine Vorrichtung zur Wiedergewinnung dieser Informationen bei einem Wechsel in den aktiven Zustand verfügt.

6. Routing-System gemäß einem der vorgenannten Ansprüche, bei welchem ein stabiler Zustand ein Zustand in der Liste "Down", "Point to Point", "DROther", "Backup" und "DR" gemäß dem OSPF-Protokoll ist.
